# EUROPÄISCHE PATENTSCHRIFT

(11) **EP 1 815 266 B1**
(45) Veröffentlichungstag und Bekanntmachung des Hinweises auf die Patenterteilung: **07.01.2009**
(21) Anmeldenummer: 05786981.0
(22) Anmeldetag: 16.09.2005
(51) Int. Cl.: G01S 7/40

(54) **VORRICHTUNG ZUR ENTFERNUNGSMESSUNG MITTELS ELEKTROMAGNETISCHER WELLEN**
APPARATUS FOR MEASURING DISTANCES BY MEANS OF ELECTROMAGNETIC WAVES
DISPOSITIF DE MESURE DE DISTANCE AU MOYEN D'ONDES ELECTROMAGNETIQUES

(30) Priorität: 15.11.2004 DE 102004055063
(43) Veröffentlichungstag der Anmeldung: 08.08.2007
(73) Patentinhaber: ROBERT BOSCH GMBH, 70442 Stuttgart (DE)
(72) Erfinder: ECKEL, Matthias, 60433 Frankfurt (DE); HOETZEL, Juergen, 61197 Florstadt (DE)
(86) Internationale Anmeldenummer: PCT/EP2005/054616
(87) Internationale Veröffentlichungsnummer: WO 2006/051020

(56) Entgegenhaltungen:
- EP-A- 1 191 349
- DE-A1- 10 249 707
- US-B1- 6 509 864

## Beschreibung

### STAND DER TECHNIK

Die vorliegende Erfindung betrifft allgemein Abstandmessvorrichtungen, und betrifft insbesondere eine Vorrichtung zur Entfernungsmessung mittels elektromagnetischer Wellen. Eine solche Vorrichtung gemäß dem Oberbegriff des Patentanspruchs 1 ist bekannt aus der EP-A-1191349. Dort werden im Empfangspfad des Radarsensors mit einem Verzögerungselement Pulse für einen Mischer verzögert, um anhand der Verzögerungszeit die Entfernung zwischen Radarsensor und Hindernis zu bestimmen. Eine Spannungsrampe hat dort während einer Signalauswerteperiode einen konstanten Wert.

Obwohl die vorliegende Erfindung für beliebige Abstands- und Entfernungsmessungen einsetzbar ist, wird die der vorliegenden Erfindung zugrundeliegende Problematik in Bezug auf eine Warnvorrichtung und ein Warnverfahren für ein Kraftfahrzeug beschrieben werden.

Insbesondere betrifft die vorliegende Erfindung eine Entfernungsmessvorrichtung, die elektromagnetische Wellen einsetzt und umfasst: eine Sendeeinrichtung zur Aussendung, in einem Messmodus, der elektromagnetischen Wellen als ein Sendesignal zu einem Messobjekt, wobei die Sendeeinrichtung ferner einen Pulsgenerator zur Ausgabe eines Pulssteuersignals aufweist, derart, dass die elektromagnetischen Wellen als Sendepulse in Abhängigkeit einer Ansteuerung durch einen Pulsgenerator ausgegeben werden; eine Empfangseinrichtung zur Erfassung, in dem Messmodus, der von dem Messobjekt rückgestreuten elektromagnetischen Wellen als ein Empfangssignal, wobei die Empfangseinrichtung ferner eine Verzögerungseinheit zur zeitlichen Verzögerung des von dem Pulsgenerator ausgegebenen Pulssteuersignals in Abhängigkeit von einem der Verzögerungseinheit zugeführten Rampensignal und zur Ausgabe eines verzögerten Pulssteuersignals und eine Mischereinheit zur Mischung des Empfangssignals mit entsprechend dem verzögerten Pulssteuersignal zeitlich verzögerten Sendepulsen und zur Ausgabe eines Messsignals in Abhängigkeit von der Messentfernung aufweist, wobei das Messsignal nur dann ausgegeben wird, wenn die durch die Verzögerungseinheit vorgegebene zeitliche Verzögerung mit einer Laufzeit der Sendepulse von der Sendeeinrichtung zum Messobjekt und zurück zu der Empfangseinrichtung übereinstimmt; und eine Auswerteeinrichtung zur Bestimmung, in einem Auswertemodus, der Laufzeit und zur Ausgabe der Messentfernung als ein Messergebnis.

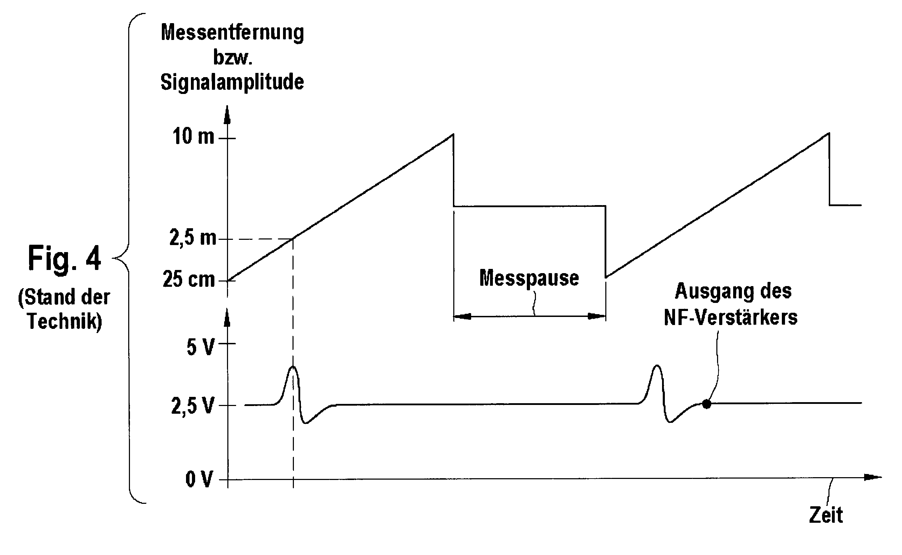

Allgemein werden Entfernungsmesssysteme, welche Entfernungsmessungen auf der Basis von an einem Messobjekt rückgestreuten elektromagnetischen Wellen durchführen, zur Abstandsmessung in Kraftfahrzeugen eingesetzt. Hierbei werden elektromagnetische Wellen, die eine Grundfrequenz von beispielsweise 24 Gigahertz (GHz) aufweisen, als einzelne Pulse zu dem Messobjekt, d.h. einem vor dem Fahrzeug befindlichen Hindernis, ausgesandt und von diesem zurückgeworfen. Die von dem Messobjekt zurückgeworfenen ausgesandten Pulse (Sendepulse) werden in einer Empfangseinrichtung des Messsystems erfasst und dort mit den ursprünglich ausgesandten Sendepulsen, die als Referenzpulse dienen, überlagert. Eine Mischeinrichtung und eine Auswerteelektronik sorgen dafür, dass ein Messsignal aus einer Mischereinheit, in welcher die Referenzpulse mit den empfangenen Sendepulsen gemischt werden, nur dann ausgegeben wird, wenn die Referenzpulse zeitlich mit den entsprechenden, vom Messobjekt rückgestreuten Sendepulsen übereinstimmen. Da die von dem Messobjekt rückgestreuten Sendepulse eine Laufzeit von der Sendeeinrichtung zum Messobjekt und zurück zu der Empfangseinrichtung des Messsystems benötigen, werden, um eine zeitliche Überlappung zu erzielen, auch die Empfangspulse in der Empfangseinrichtung des Messsystems durch eine Verzögerungseinheit zeitlich verzögert. Üblicherweise wird eine zeitliche Verzögerung in der Form eines Rampensignals (Spannungsrampe) vorgegeben, wie dies in Fig. 4 für ein herkömmliches Messsystem veranschaulicht ist. In dem Graphen der Fig. 4 entspricht die x-Achse einem zeitlichen Signalverlauf, während die y-Achse die Signalverzögerung der Sendepulse gegenüber den Referenzpulsen bezeichnet und in Abstandswerten (25 cm ... 2,5 m) geeicht ist. Befindet sich vor der Sendeeinrichtung beispielsweise in einem Abstand von 2,5 m ein Hindernis, so gibt die in der Empfangseinrichtung angeordnete Mischereinheit ein Messsignal zu einem Zeitpunkt aus, der diesem Messabstand entspricht, wie in Fig. 4 durch die gestrichelte Linie veranschaulicht. Weiterhin zeigt Fig. 4, dass eine Messung repetitiv vorgenommen wird, d.h. die Spannungsrampe und damit die kontinuierliche zeitliche Verzögerung, die durch die Verzögerungseinheit eingestellt wird, wird mehrfach wiederholt. Weiterhin zeigt Fig. 4, dass eine Messpause zwischen den einzelnen Spannungsrampen vorgegeben wird, um der Auswerteeinheit des Messsystems (NF-Teil) eine Zeit zur Auswertung der von der Mischereinheit ausgegebenen Pulse und zur Bereitstellung eines Messergebnisses zu erlauben.

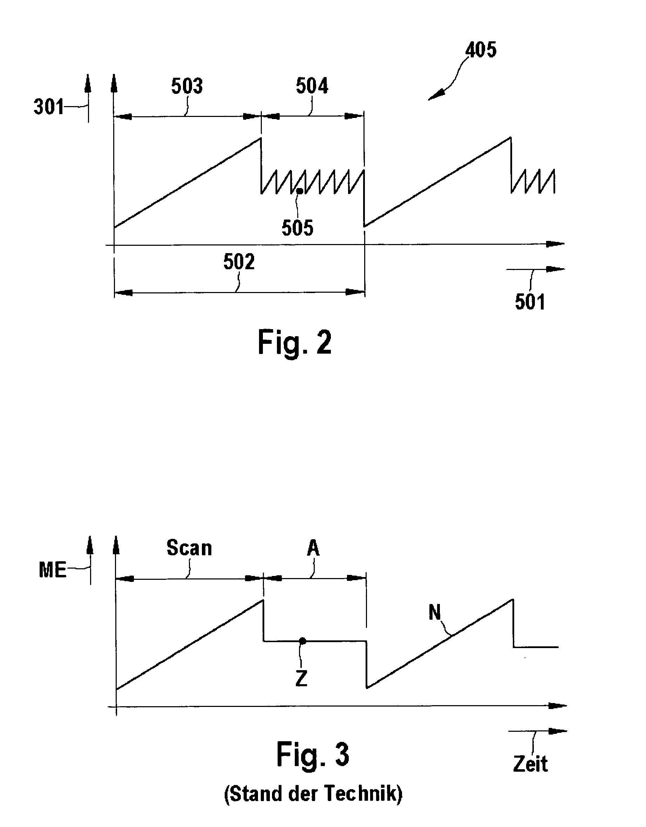

Fig. 3 zeigt einen typischen Verlauf des Rampensignals in der Scan-Phase und der Auswerte-Phase (A), wobei die Messentfernung (ME) als Funktion der Zeit aufgetragen ist. Als Auswertezeit A verbleibt das Spannungsrampensignal bei dem herkömmlichen Messverfahren auf einem konstanten Wert, üblicherweise auf einem Wert zwischen einem minimalen Spannungswert und einem maximalen Spannungswert der Spannungsrampe. Dieser in der Fig. 3 mit Z bezeichnete Wert entspricht einer spezifischen Entfernung, die von dem Entfernungsmesssystem gemessen werden kann. Je nach Auflösung des Messsystems sind die den Spannungswerten der Spannungsrampe zugeordneten Entfernungen in sogenannte "Entfernungszellen" eingeteilt. Die dem Spannungswert Z entsprechende Entfernungszelle wird also während des Auswertemodus gemessen, da auch während des Auswertemodus kontinuierlich Sendepulse zu dem Messobjekt gesendet und von diesem durch die Empfangsvorrichtung des Messsystems empfangen werden.

Befindet sich innerhalb einer derartigen Entfernungszelle ein Messobjekt vor dem Sensor, so entsteht ein Nutzsignal, welches Kopplungskondensatoren, die zwischen dem HF-Teil des Messsystems und dem NF-Teil des Messsystems angeordnet sind, auflädt, wodurch der Arbeitspunkt in dem NF-Teil des Messsystems verschoben wird. In nachteiliger Weise ergibt sich dadurch bei einem nachfolgenden Scan (Bezugszeichen N in Fig. 3) ein Messfehler.

Es ist daher eine Aufgabe der vorliegenden Erfindung, eine Entfernungsmessvorrichtung und ein entsprechendes Verfahren vorzusehen, bei welchen eine Verschiebung des Arbeitspunkts, die durch während des Auswertemodus durchgeführte Messungen herbeigeführt wird, vermieden wird.

Diese Aufgabe wird erfindungsgemäß durch eine Vorrichtung mit den Merkmalen des Patentanspruchs 1 gelöst. Ferner wird die obige Aufgabe durch ein im Patentanspruch 5 angegebenes Verfahren gelöst.

Weitere Ausgestaltungen der Erfindung ergeben sich aus den Unteransprüchen.

### VORTEILE DER ERFINDUNG

Ein wesentlicher Gedanke der Erfindung besteht darin, mittels des in der Empfangseinrichtung des Messsystems vorgesehenen Rampengenerators ein derartiges Rampensignal bereitzustellen, dass auch während des Auswertemodus unterschiedliche Entfernungszellen angesprochen werden können, welche zu unterschiedlichen Entfernungsmesssignalen führen, die sich während der Auswertezeit gegenseitig kompensieren. Auf diese Weise wird der Vorteil erzielt, dass durch eine derartige Kompensation eine Verschiebung des Arbeitspunkts in dem NF-Teil der Messvorrichtung vermieden wird.

In zweckmäßiger Weise ist es somit möglich, Kopplungskondensatoren, die in dem NF-Teil angeordnet sind, beizubehalten, um einen einfachen Schaltungsaufbau kostengünstig zu realisieren..Die Kopplungskondensatoren werden während der Messpause, d.h. während der Auswertezeit zwar durch Entfernungsmessungen, die in den einzelnen Entfernungszellen durchgeführt werden, aufgeladen, es besteht jedoch der Vorteil, dass durch eine Ansteuerung unterschiedlicher Entfernungszellen, welche unterschiedlichen Messabständen entsprechen, eine Kompensation dadurch erreicht wird, dass sich positive und negative Aufladungen des Kopplungskondensators gegenseitig aufheben. Auf diese Weise wird der Zustand erzielt, dass keine relevante Entfernungsmessung während der Auswertezeit durchgeführt wird, so dass eine sich an eine Messpause anschließende Messung bei unverschobenem Arbeitspunkt in dem NF-Teil gestartet werden kann.

Die erfindungsgemäße Messvorrichtung zur Entfernungsmessung mittels elektromagnetischer Wellen weist im Wesentlichen auf: eine Sendeeinrichtung zur Aussendung, in einem Messmodus, der elektromagnetischen Wellen als ein Sendesignal zu einem Messobjekt, wobei die Sendeeinrichtung ferner einen Pulsgenerator zur Ausgabe eines Pulssteuersignals, derart, dass die elektromagnetischen Wellen als Sendepulse in Abhängigkeit einer Ansteuerung durch einen Pulsgenerator ausgegeben werden, umfasst; eine Empfangseinrichtung zur Erfassung, in dem Messmodus, der von dem Messobjekt zurückgestreuten elektromagnetischen Wellen als ein Empfangssignal, wobei die Empfangseinrichtung ferner eine Verzögerungseinheit zur zeitlichen Verzögerung des von dem Pulsgenerator ausgegebenen Pulssteuersignals in Abhängigkeit von einem der Verzögerungseinheit zugeführten Rampensignal und zur Ausgabe eines verzögerten Pulssteuersignals und eine Mischereinheit zur Mischung des Empfangssignals mit entsprechend dem verzögerten Pulssteuersignal zeitlich verzögerten Sendepulsen und zur Ausgabe eines Messsignals in Abhängigkeit von der Messentfernung aufweist, wobei das Messsignal nur dann ausgegeben wird, wenn die durch die Verzögerungseinheit vorgegebene zeitliche Verzögerung mit einer Laufzeit der Sendepulse von der Sendeeinrichtung zum Messobjekt und zurück zu der Empfangseinrichtung übereinstimmt; und eine Auswerteeinrichtung zur Bestimmung, in einem Auswertemodus, der Laufzeit und zur Ausgabe der Messentfernung als ein Messergebnis, wobei eine Kompensationseinheit zur Kompensation von während des Auswertemodus durchgeführten Entfernungsmessungen bereitgestellt ist.

In den Unteransprüchen finden sich vorteilhafte Weiterbildungen und Verbesserungen des jeweiligen Gegenstandes der Erfindung.

Gemäß einer bevorzugten Weiterbildung der vorliegenden Erfindung ist das Messergebnis in unterschiedliche, der Messentfernung entsprechende Entfernungszellen eingeteilt.

Vorzugsweise umfasst die Kompensationseinheit zur Kompensation von während des Auswertemodus durchgeführten Entfernungsmessungen eine Verarbeitungs- und Steuereinheit (beispielsweise einen Mikrocontroller) zur Verarbeitung des in Abhängigkeit von der Messentfernung ausgegebenen Messsignals und einen Rampengenerator, wobei der Rampengenerator die Verzögerungseinheit während des Auswertemodus mit dem Rampensignal derart ansteuert, dass mindestens zwei unterschiedliche Entfernungszellen eingestellt werden.

Der Vorteil einer weiteren bevorzugten Ausbildung der Kompensationseinheit besteht darin, dass diese als ein Mikrocontroler ausgebildet ist, welcher das Rampensignal für die Verzögerungseinheit der Empfangseinrichtung vorgibt.

Vorzugsweise sind in dem Messmodus zum Messen der Entfernungen in eine vorgebbare Anzahl (n) von Entfernungszellen eingeteilt. In einer weiteren bevorzugten Ausbildung der vorliegenden Erfindung basiert die durch die Entfernungsmessvorrichtung durchgeführte Entfernungsmessung auf der Verwendung optischer Strahlung.

### ZEICHNUNGEN

Ausführungsbeispiele der Erfindung sind in den Zeichnungen dargestellt und in der nachfolgenden Beschreibung näher erläutert.

In den Zeichnungen zeigen:
Fig. 1 ein Blockdiagramm eines Messsystems mit einer Sendeeinrichtung, einer Empfangseinrichtung und einer Auswerteeinrichtung gemäß einem bevorzugten Ausführungsbeispiel der vorliegenden Erfindung;
Fig. 2 den erfindungsgemäßen Verlauf eines Rampensignals während einer Messperiode;
Fig. 3 den Verlauf eines Rampensignals in einem herkömmlichen Messverfahren; und
Fig. 4 einen Graphen, der die Erzeugung eines Messsignals in einem herkömmlichen Messverfahren veranschaulicht.

In den Figuren bezeichnen gleiche Bezugszeichen gleiche oder funktionsgleiche Komponenten oder Schritte.

### BESCHREIBUNG DER AUSFÜHRUNGSBEISPIELE

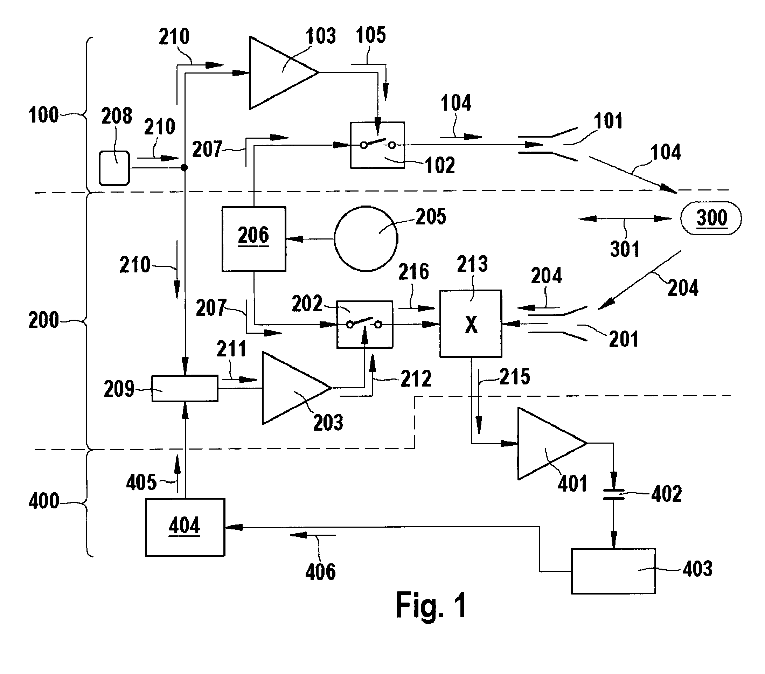

Fig. 1 zeigt ein Blockbild eines Entfernungsmesssystems gemäß einem bevorzugten Ausführungsbeispiel der vorliegenden Erfindung. Wie in Fig. 1 veranschaulicht, gliedert sich das erfindungsgemäße Messsystem in eine Sendeeinrichtung 100, eine Empfangseinrichtung 200 und eine Auswerteeinrichtung 400. Üblicherweise wird der aus der Sendeeinrichtung 100 und der Empfangseinrichtung 200 bestehende Block als der Hochfrequenzteil (HF-Teil) der Schaltungsanordnung bezeichnet, während die Auswerteeinrichtung 400 den Niederfrequenzteil (NF-Teil) der Auswerteeinrichtung bildet.

Die elektromagnetischen Wellen, mit welchen die Entfernungsmessung vorgenommen wird, werden in einer Oszillatoreinheit 205 erzeugt. Die in der Oszillatoreinheit 205 erzeugten elektromagnetischen Wellen werden als ein Oszillatorausgangssignal 207 einerseits der Sendeeinrichtung 100 zugeführt und andererseits in der Empfangseinrichtung 200 weiterverarbeitet.

Im Folgenden wird auf die Funktionsweise der Sendeeinrichtung 100 kurz eingegangen werden. Ein Bezugszeichen 102 bezeichnet eine Sendeschalteinheit, die dafür sorgt, dass die als Oszillatorausgangssignal 207 bereitgestellten elektromagnetischen Wellen nicht kontinuierlich, sondern gepulst ausgesendet werden können. Zu diesem Zweck wird die Sendeschalteinheit 102 durch ein von einer Sendetreibereinheit 103 ausgegebenes Sendepuls-Erzeugungssignal angesteuert. Somit wird durch die Sendeschalteinheit 102 ein Sendesignal 104 bereitgestellt, das aus einzelnen Sendepulsen besteht. Die Grundfrequenz der Sendepulse, d.h. die Oszillatorfrequenz der Oszillatoreinheit 205 beträgt typischerweise 24 GHz. Eine derartige Frequenz wird, wie es dem Fachmann bekannt ist, für Radar-Sensoren in vorteilhafter Weise eingesetzt.

Die Sendeeinrichtung 100 weist ferner einen Pulsgenerator 208 auf, welcher Pulssteuersignale 210 zur Verarbeitung einerseits in der Sendeeinrichtung 100 und andererseits in der Empfangseinrichtung 200 bereitstellt. Der Pulsgenerator 208 liefert das Pulssteuersignal 210, um die Sendetreibereinheit 103 anzusteuern, welche entsprechend dem Pulssteuersignal 210 eine Durchschaltung des Oszillatorausgangssignals 207 zu einer Sendeantenne 101 vornimmt. Das Sendesignal 104 wird somit als ein Pulssignal zu einem Messobjekt 300 abgestrahlt und an diesem reflektiert/gestreut/gebrochen. Das von dem Messobjekt 300 rückgestreute Sendesignal 104 wird von der Empfangseinrichtung 200 in Form eines Empfangssignals 204 aufgenommen. Das Empfangssignal 204 entspricht in seiner Struktur, d.h. der Grundfrequenz und der Pulsmodulation exakt dem Sendesignal 104 mit der Ausnahme, dass durch die Laufzeit der elektromagnetischen Wellen von der Sendeantenne 101 der Sendeeinrichtung 100 zu dem Messobjekt 300 und zurück zu einer Empfangsantenne 201 der Empfangseinrichtung 200 eine Zeitverzögerung entsteht, die sich durch die Messentfernung 301 ergibt.

Es sei darauf hingewiesen, dass die Messentfernung, u.a. eingeteilt in unterschiedliche "Entfernungszellen" das gewünschte Messsignal, welches mit der Vorrichtung zur Entfernungsmessung gewonnen werden soll, darstellt. Die Laufzeitdifferenz zwischen Aussendung des Sendesignals 104 aus der Sendeantenne und dem Empfang des entsprechenden Empfangssignals 204 in der Empfangsantenne 201 entspricht ungefähr der doppelten Messentfernung, die durch das Bezugszeichen 301 dargestellt ist, dividiert durch die Lichtgeschwindigkeit (c).

Im Folgenden wird die Funktionsweise der Empfangseinrichtung 200 an Hand des schematischen Blockbildes der Fig. 1 kurz schematisch beschrieben werden.

Die Empfangseinrichtung 200 weist eine zu der Sendeschalteinheit 102 der Sendeeinrichtung 100 analog ausgelegte Empfangsschalteinheit 202 auf, welche dafür sorgt, dass das aus der Oszillatoreinheit 205 ausgegebene Oszillatorausgangssignal 207 in einzelne Pulse "zerhackt" wird. Somit wird ein Mischereingangssignal 216 erhalten, welches, abgesehen von einer zeitlichen Verschiebung, dem Sendesignal 104 der Sendeeinrichtung 100 entspricht. Wie obenstehend unter Bezugnahme auf die Erläuterung der Sendeeinrichtung 100 beschrieben, wird auch die Empfangsschalteinheit 202 der Empfangseinrichtung 200 durch ein entsprechendes Empfangspuls-Erzeugungssignal 212 angesteuert. Das Empfangspuls-Erzeugungssignal 212 wird aus einer Empfangstreibereinheit 203 gewonnen, welche ebenfalls über den in der Sendeeinrichtung 100 angeordneten Pulsgenerator 208 angesteuert wird. Der Pulsgenerator liefert somit Pulssteuersignale 210 mit identischer Wiederholfrequenz und Periodendauer zu der Sendeeinrichtung 100 einerseits und der Empfangseinrichtung 200 andererseits.

Die Empfangseinrichtung 200 weist ferner eine Verzögerungseinheit 209 auf, mit welcher es möglich ist, das dieser zugeführte Pulssteuersignal 210 zeitlich zu verzögern, um ein verzögerter Pulssteuersignal 211 zu erhalten. Die zeitliche Verzögerung, die durch die Verzögerungseinheit 209 bereitgestellt wird, lässt sich erfindungsgemäß durch ein Rampensignal 405 einstellen, das untenstehend beschrieben werden wird.

Ein Bezugszeichen 213 bezeichnet eine Mischereinheit, in welcher das von dem Messobjekt empfangene Empfangssignal 204 und das Mischereingangssignal, das die durch die Verzögerungseinheit 209 bereitgestellte zeitliche Verzögerung aufweist, miteinander gemischt werden können. Die Mischereinheit 213 ist derart ausgelegt, dass nur dann ein Messsignal 215 aus dieser ausgegeben wird, wenn die in dem Empfangssignal 204 enthaltenen Pulse zeitlich exakt mit den in dem Mischereingangssignal 216 enthaltenen Pulse korrelieren. Derartige Pulse weisen einen Verlauf auf, wie er herkömmlich unter Bezugnahme auf Fig. 4 erläutert worden ist, d.h. der Ausgang einer Verstärkereinheit 401 (NF-Verstärker) entspricht dem in Fig. 4 gezeigten, unteren Kurvenverlauf.

Im Folgenden wird die in dem erfindungsgemäßen Messsystem bereitgestellte Auswerteeinrichtung 400 kurz erläutert werden. In der Auswerteeinrichtung dient die Verstärkereinheit 401 einer Verstärkung des Ausgangssignals der Mischereinheit 213, welches das Messsignal 215 darstellt. Wie obenstehend unter Bezugnahme auf die Erläuterung der Empfangseinrichtung 200 gezeigt, entspricht das zeitliche Auftreten des Messsignals 215 einer gemessenen Entfernung (Messentfernung) 301. Das aus der Verstärkereinheit 401 ausgegebene Messsignal (Ausgang des NF-Verstärkers, siehe Fig. 4) wird einem Kopplungskondensator 402 zugeführt, welcher in den Entfernungsmesssystemen zur Entkopplung des HF-Teils von dem NF-Teil vorhanden sein muss. Der Kopplungskondensator 402 ist mit einer Verarbeitungs- und Steuereinheit 403 verbunden, in welcher das Messsignal 215 verarbeitet wird. Ferner gibt die Verarbeitungs- und Steuereinheit 403, welche vorzugsweise als ein Mikrocontroler ausgebildet ist, ein Steuersignal 406 zu einem Rampengenerator 404 aus. Die Ansteuerung des Rampengenerators 404 mit dem Steuersignal 406 bewirkt, dass ein Rampensignal 405 bereitgestellt wird, das einen wie untenstehend unter Bezugnahme auf Fig. 2 beschriebenen zeitlichen Verlauf aufweist.

Im Folgenden wird zunächst das Rampensignal 405, welches aus dem Rampengenerator 404 ausgegeben wird, unter Bezugnahme auf Fig. 2 näher erläutert werden. Fig. 2 zeigt den Verlauf einer Messentfernung 301, welche einer zeitlichen Verzögerung der Sendepulse durch die Aussendung aus der Sendeantenne 101 die Reflektion an dem Messobjekt 300 und anschließend dem Empfang durch die Empfangsantenne 201 entspricht, als Funktion einer Zeit 501 aufgetragen.

Ein Bezugszeichen 502 in Fig. 2 entspricht einer Messperiode, welche mehrfach wiederholt wird, d.h. es werden repetitive Messungen bereitgestellt. Die Messperiode ist in eine Abtastperiode 503 und eine Signalauswertungsperiode 504 aufgeteilt.

Wie obenstehend unter Bezugnahme auf die Beschreibung des Standes der Technik erläutert, führt das rampenförmige Signal während der Abtastperiode 503 dazu, dass eine kontinuierlich zunehmende Verzögerung durch die Verzögerungseinheit 209 bereitgestellt wird, welcher das Rampensignal 405 zugeführt wird. Entspricht die durch die Rampe während der Abtastperiode 503 eingestellte, durch die Verzögerungseinheit 209 realisierte zeitliche Verzögerung nun einer spezifischen Messentfernung 301, in welcher sich ein Messobjekt 300 vor dem Entfernungsmesssystem befindet, so wird ein Messsignal 215 aus der Mischereinheit 213 ausgegeben, woraufhin eine entsprechende Entfernung in der Verarbeitungseinrichtung 403 berechnet werden kann. Eine derartige Bestimmung der Entfernung wird während der in Fig. 2 dargestellten Signalauswertungsperiode 504 durchgeführt. Erfindungsgemäß liefert der Rampengenerator 404 während der Signalauswertungsperiode 504 nun ein Kompensationsrampensignal 505, derart, dass eine vorgebbare Anzahl von Rampen durchlaufen werden, wodurch unterschiedliche Entfernungszellen einstellbar sind. Auf diese Weise wird der Kopplungskondensator 402 mit unterschiedlichen - positiven und negativen - Spannungssignalen beaufschlagt, welche sich bei einer entsprechenden Anzahl von eingestellten Entfernungszellen gegenseitig aufheben. Somit wird der erfindungsgemäße Vorteil erzielt, dass sich der Arbeitspunkt in dem NF-Teil des Entfernungsmesssystems nicht verschiebt.

Üblicherweise ist das Potential der Spannungsrampe, d.h. des von dem Rampengenerator 404 gelieferten Rampensignals 405 proportional zu der Messentfernung 301. Es ist zweckmäßig, das Rampensignal 405 als eine Treppenfunktion auszubilden, bei der jede einzelne Stufe einer Entfernungszelle entspricht. Durch den NF-Teil des Messsystems werden zunächst sämtliche Entfernungszellen vom Messbeginn bis zum Messende angesprochen, woraufhin das Nutzsignal gespeichert wird. In der anschließenden Signalauswerlungsperiode 504 erfolgt dann eine Signalauswertung, woraufhin der nächste Scan, d.h. die darauffolgende Abtastperiode 503 beginnt. Erfindungsgemäß werden auch während der Signalauswertungsperiode 504 stets unterschiedliche Entfernungszellen eingestellt, da das Rampensignal 405 während der Signalauswertungsperiode 504 als ein Kompensationsrampensignal 505, wie in Fig. 2 veranschaulicht, ausgebildet ist.

Es bleibt somit nicht eine einzige Entfernungszelle eingestellt, wie obenstehend unter Bezugnahme auf das Verfahren gemäß dem Stand der Technik beschrieben, sondern es werden immer wieder neue Entfernungszellen eingestellt, derart, dass sich der Kopplungskondensator 402 der Auswerteeinrichtung 400 nicht nennenswert aufladen kann. Somit wird die erfindungsgemäße Aufgabe gelöst, d.h. es wird eine Verschiebung des Arbeitspunkts in dem NF-Teil vor einem neuen Messzyklus, d.h. vor einer neuen Abtastperiode 503 vermieden.

Üblicherweise triggern die Flanken des Pulssteuersignals 210 die Sendepulserzeugung bzw. die Erzeugung des Mischereingangssignals 216. Die Wiederholfrequenz des durch den Pulsgenerator 208 bereitgestellten Pulssteuersignals 210 beträgt typischerweise 2,5 Megahertz (MHz). Vorzugsweise wird ein Bereich für eine Messentfernung 301 von 25 cm bis 10 m einstellbar, wobei die Entfernungszellen in vorteilhafter Weise eine geometrische Länge von 4 cm aufweisen. Vorzugsweise entspricht der Hub, der durch das Kompensationsrampensignal 505 während einer Signalauswertungsperiode 504 der Messperiode 502 bereitgestellt wird, einem Hub, der einer geometrischen Länge von 100 cm entspricht.

Bezüglich der in den Fig. 3 und 4 dargestellten, herkömmlichen Messverfahren sei auf die Beschreibungseinleitung verwiesen.

Obwohl die vorliegende Erfindung vorstehend an Hand bevorzugter Ausführungsbeispiele beschrieben wurde, ist sie darauf nicht beschränkt, sondern auf vielfältige Weise modifizierbar.

Auch ist die Erfindung nicht auf die genannten Anwendungsmöglichkeiten im Kraftfahrzeug beschränkt.

## Patentansprüche

1. Vorrichtung zur Entfernungsmessung mittels elektromagnetischer Wellen, mit:
a) einer Sendeeinrichtung (100) zur Aussendung, der elektromagnetischen Wellen als ein Sendesignal (104) zu einem Messobjekt (300) während einer periodisch wiederholten Messperiode, welche sich in eine Abtastperiode (503) und in eine Signalauswertungsperiode (504) aufteilt, wobei die Sendeeinmichtung (100) ferner aufweist:
a1) einen Pulsgenerator (208) zur Ausgabe eines Pulssteuersignals (210) derart, dass die elektromagnetischen Wellen als Sendepulse in Abhängigkeit einer Ansteuerung durch einen Pulsgenerator (208) ausgegeben werden;
b) einer Empfangseinrichtung (200) zur Erfassung, in der Messperiode, der von dem Messobjekt (300) rückgestreuten elektromagnetischen Wellen als ein Empfangssignal (204), wobei die Empfangseinrichtung (200) ferner aufweist:
b1) eine Verzögerungseinheit (209) zur zeitlichen Verzögerung des von dem Pulsgenerator (208) ausgegebenen Pulssteuersignals (210) in Abhängigkeit von einem der Verzögerungseinheit (209) während der Abtastperiode (503) zugeführten Rampensignal (405) und zur Ausgabe eines verzögerten Pulssteuersignals (211); und
b2) eine Mischereinheit (213) zur Mischung des Empfangssignals (204) mit entsprechend dem verzögerten Pulssteuersignal (211) zeitlich verzögerten Sendepulsen und zur Ausgabe eines Messsignals (215) in Abhängigkeit von der Messentfernung (301), wobei das Messsignal (215) nur dann ausgegeben wird, wenn die durch die Verzögerungseinheit (209) vorgegebene zeitliche Verzögerung mit einer Laufzeit der Sendepulse von der Sendeeinrichtung (100) zum Messobjekt (300) und zurück zu der Empfangseinrichtung(200) übereinstimmt; und
c) einer Auswerteeinrichtung (400) zur Bestimmung, während der Signalauswertungsperiode, der Laufzeit und zur Ausgabe der Messentfernung (301) als ein Messergebnis,
d) einer Kompensationseinheit zur Kompensation von während der Signalauswertungsperiode durchgeführten Entfernungsmessungen,
**dadurch gekennzeichnet,**
**dass** die Kompensationseinheit zur Kompensation von während der Signalauswertungsperiode (504) durchgeführten Entfernungsmessungen eine Verarbeitungs- und Steuereinheit (403) zur Verarbeitung des in Abhängigkeit von der Messentfernung (301) ausgegebenen Messsignals (215) und einen Rampengenerator (404) umfasst, wobei der Rampengenerator (404) die Verzögerungseinheit (209) während der Signalauswertungsperiode mit einem Kompensationsrampensignal (505) ansteuert, welches eine vorgebbare Anzahl von Rampen durchläuft und damit die Einstellung unterschiedlicher Entfernungszellen ermöglicht, indem die Verzögerungseinheit (209) das ausgegebene Pulssteuersignal (210) entsprechend zeitlicher Verzögerungen der Laufzeiten von mindestens zwei unterschiedlichen Entfernungszellen verzögert und einen Kopplungskondensator (402) am Eingang der Verarbeitungs- und Steuereinheit (403) mit unterschiedlichen positiven und negativen Spannungssignalen beaufschlagt, welche sich bei einer entsprechenden Anzahl von eingestellten Entfernungszellen aufheben.

2. Vorrichtung nach Anspruch 1,
**dadurch gekennzeichnet,**
**dass** das Messergebnis in unterschiedliche, der Messentfernung (301) entsprechende Entfernungszellen eingeteilt ist.

3. Vorrichtung nach Anspruch 1,
**dadurch gekennzeichnet,**
**dass** die Kompensationseinheit zur Kompensation von während der Signalauswertungsperiode durchgeführten Entfernungsmessungen als ein Mikrocontroller ausgebildet ist, welcher das Rampensignal (405) für die Verzögerungseinheit (209) der Empfangseinrichtung (200) vorgibt.

4. Vorrichtung nach Anspruch 1,
**dadurch gekennzeichnet,**
**dass** zur Entfernungsmessung mittels elektromagnetischer Wellen optische Strahlung bereitgestellt ist.

5. Verfahren zur Entfernungsmessung mittels elektromagnetischer Wellen, mit den folgenden Schritten:
a) Aussenden, mittels einer Sendeeinrichtung (100) der elektromagnetischen Wellen als ein Sendesignal (104) zu einem Messobjekt (300) während einer periodisch wiederholten Messperiode, welche sich in eine Abtastperiode und eine Signalauswertungsperiode aufteilt, wobei die Sendeeinrichtung (100) ferner aufweist:
a1) Aufbereiten von elektromagnetischen Wellen als Sendepulse in Abhängigkeit einer Ansteuerung durch einen Pulsgenerator (208), welcher ein Pulssteuersignal (210) ausgibt,
b) Erfassen, mittels einer Empfangseinrichtung (200) in der Messperiode, der von dem Messobjekt (300) rückgestreuten elektromagnetischen Wellen als ein Empfangssignal (204), wobei die Empfangseinrichtung (200) ferner aufweist:
b1) einer zeitlichen Verzögerung des von dem Pulsgenerator (208) ausgegebenen Pulssteuersignals (210) in Abhängigkeit von einem einer Verzögerungseinheit (209) während der Abtastperiode (503) zugeführten Rampensignal (405) und zur Ausgabe eines verzögerten Pulssteuersignals (211); und
b2) einer Mischung des Empfangssignals (204) mittels einer Mischereinheit (213) mit entsprechend dem verzögerten Pulssteuersignal (211) zeitlich verzögerten Sendepulsen und zur Ausgabe eines Messsignals (215) in Abhängigkeit von der Messentfernung (301), wobei das Messsignal (215) nur dann ausgegeben wird, wenn die durch die Verzögerungseinheit (209) vorgegebene zeitliche Verzögerung mit einer Laufzeit der Sendepulse von der Sendeeinrichtung (100) zum Messobjekt (300) und zurück zu der Empfangseinrichtung (200) übereinstimmt; und
c) Bestimmen, mittels einer Auswerteeinrichtung (400) während der Signalauswertungsperiode (504), der Laufzeit und Ausgeben der Messentfernung (301) als ein Messergebnis,
wobei
mittels einer Kompensationseinheit während der Signalauswertungsperiode (504) durchgeführte Entfernungsmessungen kompensiert werden,
**dadurch gekennzeichnet,**
**dass** mittels eines Rampengenerators (404) die Verzögerungseinheit (209) während der Signalauswertungsperiode mit einem Kompensationsrampensignal (505) angesteuert wird, welches eine vorgebbare Anzahl von Rampen durchläuft und damit die Einstellung unterschiedlicher Entfernungszellen ermöglicht, indem durch die Verzögerungseinheit (209) das ausgegebene Pulssignal (210) entsprechend zeitlichen Verzögerungen der Laufzeiten von mindestens zwei unterschiedlichen Entfernungszellen verzögert, und einen Kopplungskondensator (402) am Eingang der Verarbeitungs- und Steuereinheit (403) mit unterschiedlichen positiven und negativen Spannungssignalen beaufschlagt, welche sich bei einer entsprechenden Anzahl von eingestellten Entfernungszellen aufheben.

## Claims

1. Apparatus for measuring distances by means of electromagnetic waves, having:
a) a transmitting device (100) for emitting the electromagnetic waves, in the form of a transmission signal (104), to a measurement object (300) during a periodically repeated measurement period which is subdivided into a sampling period (503) and a signal evaluation period (504), the transmitting device (100) also having:
a1) a pulse generator (208) for outputting a pulse control signal (210) in such a manner that the electromagnetic waves are output, in the form of transmission pulses, on the basis of driving by a pulse generator (208);
b) a receiving device (200) for detecting, in the measurement period, the electromagnetic waves which are backscattered by the measurement object (300) in the form of a received signal (204), the receiving device (200) also having:
b1) a delay unit (209) for temporally delaying the pulse control signal (210) output by the pulse generator (208) on the basis of a ramp signal (405), which is supplied to the delay unit (209) during the sampling period (503), and for outputting a delayed pulse control signal (211); and
b2) a mixer unit (213) for mixing the received signal (204) with transmission pulses, which have been temporally delayed in accordance with the delayed pulse control signal (211), and for outputting a measurement signal (215) on the basis of the measurement distance (301), the measurement signal (215) being output only when the temporal delay predefined by the delay unit (209) corresponds to a propagation time of the transmission pulses from the transmitting device (100) to the measurement object (300) and back to the receiving device (200); and
c) an evaluation device (400) for determining the propagation time during the signal evaluation period and for outputting the measurement distance (301) as a measurement result,
d) a compensation unit for compensating for distance measurements carried out during the signal evaluation period,
**characterized in that**
the compensation unit for compensating for distance measurements carried out during the signal evaluation period (504) comprises a processing and control unit (403) for processing the measurement signal (215) output on the basis of the measurement distance (301) and a ramp generator (404), the ramp generator (404) driving the delay unit (209) during the signal evaluation period with a compensation ramp signal (505) which passes through a predefinable number of ramps and thus makes it possible to set different distance cells by virtue of the delay unit (209) delaying the output pulse control signal (210) according to temporal delays of the propagation times from at least two different distance cells and applying different positive and negative voltage signals, which cancel one another out in the case of a corresponding number of distance cells which have been set, to a coupling capacitor (402) at the input of the processing and control unit (403).

2. Apparatus according to Claim 1,
**characterized in that**
the measurement result is divided into different distance cells corresponding to the measurement distance (301).

3. Apparatus according to Claim 1,
**characterized in that**
the compensation unit for compensating for distance measurements carried out during the signal evaluation period is in the form of a microcontroller which predefines the ramp signal (405) for the delay unit (209) of the receiving device (200).

4. Apparatus according to Claim 1,
**characterized in that**
optical radiation is provided in order to measure distances by means of electromagnetic waves.

5. Method for measuring distances by means of electromagnetic waves, having the following steps of:
a) using a transmitting device (100) to emit the electromagnetic waves, in the form of a transmission signal (104), to a measurement object (300) during a periodically repeated measurement period which is subdivided into a sampling period and a signal evaluation period, the transmitting device (100) also:
a1) preprocessing electromagnetic waves, in the form of transmission pulses, on the basis of driving by a pulse generator (208) which outputs a pulse control signal (210),
b) using a receiving device (200) to detect, in the measurement period, the electromagnetic waves which are backscattered by the measurement object (300) in the form of a received signal (204), the receiving device (200) also:
b1) temporally delaying the pulse control signal (210) output by the pulse generator (208) on the basis of a ramp signal (405), which is supplied to a delay unit (209) during the sampling period (503), and outputting a delayed pulse control signal (211); and
b2) mixing the received signal (204), by means of a mixer unit (213), with transmission pulses, which have been temporally delayed in accordance with the delayed pulse control signal (211), and outputting a measurement signal (215) on the basis of the measurement distance (301), the measurement signal (215) being output only when the temporal delay predefined by the delay unit (209) corresponds to a propagation time of the transmission pulses from the transmitting device (100) to the measurement object (300) and back to the receiving device (200); and
c) using an evaluation device (400) to determine the propagation time during the signal evaluation period (504) and to output the measurement distance (301) as a measurement result,
a compensation unit being used to compensate for distance measurements carried out during the signal evaluation period (504),
**characterized in that**
a ramp generator (404) is used to drive the delay unit (209) during the signal evaluation period with a compensation ramp signal (505) which passes through a predefinable number of ramps and thus makes it possible to set different distance cells by virtue of the delay unit (209) delaying the output pulse signal (210) according to temporal delays of the propagation times from at least two different distance cells and applying different positive and negative voltage signals, which cancel one another out in the case of a corresponding number of distance cells which have been set, to a coupling capacitor (402) at the input of the processing and control unit (403).

## Revendications

1. Dispositif de mesure de distance au moyen d'ondes électromagnétiques comprenant :
a) un dispositif d'émission (100) pour émettre des ondes électromagnétiques sous la forme d'un signal émis (104) vers un objet à mesurer (300) pendant une période de mesure répétée périodiquement, laquelle se divise en une période de balayage (503) et une période d'interprétation du signal (504), le dispositif d'émission (100) présentant en plus :
a1) un générateur d'impulsions (208) pour délivrer un signal de commande à impulsion (210) de telle sorte que les ondes électromagnétiques soient délivrées sous la forme d'impulsions émises en fonction d'une commande par un générateur d'impulsions (208) ;
b) un dispositif de réception (200) pour acquérir sous la forme d'un signal reçu (204) les ondes électromagnétiques renvoyées par l'objet à mesurer (300), le dispositif de réception (200) comprenant en plus :
b1) une unité à retard (209) pour retarder le signal de commande à impulsion (210) délivré par le générateur d'impulsions (208) en fonction d'un signal de rampe (405) acheminé à l'unité à retard (209) pendant la période de balayage (503) et pour délivrer un signal de commande à impulsion retardé (211) ; et
b2) une unité de mélange (213) pour mélanger le signal reçu (204) avec des impulsions retardées dans le temps conformément au signal de commande à impulsion (211) et pour délivrer un signal de mesure (215) en fonction de la distance de mesure (301), le signal de mesure (215) n'étant délivré que lorsque le retard dans le temps prédéfini par l'unité à retard (209) coïncide avec un temps de propagation de l'impulsion émise par le dispositif d'émission (100) allant vers l'objet à mesurer (300) et revenant vers le dispositif de réception (200) ; et
c) un dispositif d'interprétation (400) pour déterminer, pendant la période d'interprétation du signal, le temps de propagation et pour délivrer la distance de mesure (301) en tant que résultat de la mesure,
d) une unité de compensation destinée à compenser les mesures de distance effectuées pendant la période d'interprétation du signal,
**caractérisé en ce que** l'unité de compensation destinée à compenser les mesures de distance effectuées pendant la période d'interprétation du signal (504) comprend une unité de traitement et de commande (403) pour traiter le signal de mesure (215) délivré en fonction de la distance de mesure (301) et un générateur de rampe (404), le générateur de rampe (404) commandant l'unité à retard (209) pendant la période d'interprétation du signal avec un signal de rampe de compensation (505) qui parcourt un nombre à prédéfinir de rampes et permet ainsi le réglage de différentes cellules de distance **en ce que** l'unité à retard (209) retarde le signal de commande à impulsion (210) délivré conformément aux retards dans le temps des temps de propagation d'au moins deux cellules de distance différentes et soumet un condensateur de couplage (402) à l'entrée de l'unité de traitement et de commande (403) à différents signaux de tension positifs et négatifs qui s'annulent en présence d'un nombre correspondant de cellules de distance établies.

2. Dispositif selon la revendication 1, **caractérisé en ce que** le résultat de la mesure est divisé en différentes cellules de distance correspondant à la distance de mesure (301).

3. Dispositif selon la revendication 1, **caractérisé en ce que** l'unité de compensation destinée à compenser les mesures de distance effectuées pendant la période d'interprétation du signal est réalisée sous la forme d'un microcontrôleur qui prédéfinit le signal de rampe (405) pour l'unité à retard (209) du dispositif de réception (200).

4. Dispositif selon la revendication 1, **caractérisé en ce qu'**un rayonnement optique est fourni pour la mesure de distance au moyen d'ondes électromagnétiques.

5. Procédé de mesure de distance au moyen d'ondes électromagnétiques comprenant les étapes suivantes :
a) Émission, au moyen d'un dispositif d'émission (100), d'ondes électromagnétiques sous la forme d'un signal émis (104) vers un objet à mesurer (300) pendant une période de mesure répétée périodiquement, laquelle se divise en une période de balayage et une période d'interprétation du signal, le dispositif d'émission (100) présentant en plus les étapes suivantes:
a1) Préparation d'ondes électromagnétiques sous la forme d'impulsions émises en fonction d'une commande par un générateur d'impulsions (208) qui délivre un signal de commande à impulsion (210),
b) Acquisition, au moyen d'un dispositif de réception (200) pendant la période de mesure, des ondes électromagnétiques renvoyées par l'objet à mesurer (300) sous la forme d'un signal reçu (204), le dispositif de réception (200) présentant en plus :
b1) un retard dans le temps du signal de commande à impulsion (210) délivré par le générateur d'impulsions (208) en fonction d'un signal de rampe (405) acheminé à une unité à retard (209) pendant la période de balayage (503) et permettant de délivrer un signal de commande à impulsion retardé (211) ; et
b2) un mélange du signal reçu (204) au moyen d'une unité de mélange (213) avec des impulsions retardées dans le temps conformément au signal de commande à impulsion (211) et permettant de délivrer un signal de mesure (215) en fonction de la distance de mesure (301), le signal de mesure (215) n'étant délivré que lorsque le retard dans le temps prédéfini par l'unité à retard (209) coïncide avec un temps de propagation de l'impulsion émise par le dispositif d'émission (100) allant vers l'objet à mesurer (300) et revenant vers le dispositif de réception (200) ; et
c) Détermination, au moyen d'un dispositif d'interprétation (400) pendant la période d'interprétation du signal (504), du temps de propagation et délivrance de la distance de mesure (301) en tant que résultat de la mesure,
les mesures de distance effectuées pendant la période d'interprétation du signal (504) étant compensées au moyen d'une unité de compensation,
**caractérisé en ce que** l'unité à retard (209) est commandée pendant la période d'interprétation du signal au moyen d'un générateur de rampe (404) par un signal de rampe de compensation (505), lequel parcourt un nombre à prédéfinir de rampes et permet ainsi le réglage de différentes cellules de distance **en ce que** l'unité à retard (209) retarde le signal de commande à impulsion (210) délivré conformément aux retards dans le temps des temps de propagation d'au moins deux cellules de distance différentes et soumet un condensateur de couplage (402) à l'entrée de l'unité de traitement et de commande (403) à différents signaux de tension positifs et négatifs qui s'annulent en présence d'un nombre correspondant de cellules de distance établies.
